# FASCICULE DE BREVET EUROPEEN

(11) **EP 0 549 775 B1**
(45) Date de publication et mention de la délivrance du brevet: **04.09.1996**
(21) Numéro de dépôt: 92916121.4
(22) Date de dépôt: 17.07.1992
(51) Int. Cl.: C07F 7/30, A61M 5/178, A61F 2/12

(54) **COMPOSES DU GERMANIUM ET LEUR UTILISATION COMME HUILE BIOCOMPATIBLE**
Germaniumverbindungen und deren Verwendung als bioverträgliche Oel
GERMANIUM COMPOUNDS AND THEIR USE AS BIOCOMPATIBLE OIL

(30) Priorité: 19.07.1991 FR 9109157
(43) Date de publication de la demande: 07.07.1993
(73) Titulaire: METALEUROP S.A., F-94126 Fontenay-sous-Bois Cédex (FR)
(72) Inventeur: THOMAS, Christian, F-75020 Paris (FR); FOSSI, Paolo, F-78990 Elancourt (FR); PERRIER, Elisabeth, F-78310 Maurepas (FR); MAZEROLLES, Pierre, F-31320 Castanet (FR)
(74) Mandataire: Warcoin, Jacques
(86) Numéro de dépôt international: FR9200698
(87) Numéro de publication internationale: WO9302088

(56) Documents cités:
- DE-B- 1 190 462
- US-A- 2 451 871
- CHEMICAL ABSTRACTS, vol. 83, 1975, Columbus, Ohio, US; abstract no. 153583F, SMOL'YANINOVA, D.D. ET AL: 'HEAT CAPACITY OF OCTAMETHYLTETRACYCLOGERMANE AND OCTAETHYLTETRACYCLOGERMANE AT THE TEMPERATURE OF LIQUID NITROGEN' page 423
- BULLETIN OF THE CHEMICAL SOCIETY OF JAPAN vol. 64, no. 4, Avril 1991, pages 1381 - 1382; OKANO, M. ET AL: 'ELECTROCHEMICAL HALOGENATION OF TRISUBSTITUTED GERMANES AND SILANES'
- Journal of Organometallic Chem., 301(1986) pp 153-160
- Synth.React.Inorg. Met-Org.Chem., 16(7), 905-913(1986)

## Description

L'invention a pour objet de nouveaux composés du germanium ou germoxanes et leur utilisation comme huile biocompatible. Elle a également pour objet un procédé de préparation de ceux-ci.

On connaît déjà des matériaux utilisables comme huiles biocompatibles. Il s'agit essentiellement des silicones, dont la famille la plus représentative correspond à la formule ((CH₃)₂SiO)ₙ, où n désigne le nombre d'unités monomères et peut atteindre des valeurs très élevées, allant jusqu'à plusieurs dizaines de milliers d'unités.

Les huiles silicones présentent des caractéristiques de viscosité et de biocompatibilité qui les rendent aptes à l'utilisation indiquée.

Toutefois, dans certaines applications, notamment lorsqu'elles sont utilisées comme fluide de remplissage de prothèses destinées à rester de façon durable dans le corps humain, elles présentent des caractéristiques de biodégradabilité insuffisante. On a en effet constaté que le fluide de remplissage a tendance à exsuder à travers la membrane qui le sépare de l'organisme par manque de résistance à l'écoulement. Or, lorsque ce fluide de remplissage est une huile de silicone, l'huile a tendance à s'accumuler dans le système réticulo endothélial, provoquant des maladies autoimmunes (polyarthrite rhumatoîde) cf. : Chirurgie, 1988, 114, p 538-544 et Ann. Chir. Plast. Esthét., 1986, 31, 3, p. 268-271.

L'invention vise, précisément, à remédier à cet inconvénient.

Certains germoxanes ont déjà été décrits dans l'art antérieur.

Le Bulletin de la société chimique du Japon, vol. 64, n° 4, Avril 1991, pages 1381-1832 décrit des composés de formule (Ph₃Ge)₂O et (Ph₂MeGe)₂O obtenus par halogénation électrochimique de germanes trisubstitués.

Le document DE-A-1 190 462 décrit un procédé de préparation de composés triorganosilyle et triorganogermanyle de formule R₃MeXLᵢ dans laquelle R correspond à un radical alkyle, alcényle, aryle ou aralkyle, Me est un atome de silicium du germanium et X est un atome d'oxygène ou de soufre ou de sélénium. A l'exemple 2, il est décrit un octaméthylcyclotetragermoxane.

Le document Chemical Abstracts, vol. 83, 1975, abrégé n° 153583f décrit un octaméthylcyclotetragermoxane et un octaéthylcyclotetragermoxane.

Les documents Journal of Organometallic Chemistry, 301 (1986) 153-160 et Synth. React. Inorg. Met. Org. Chem., 16(7), 905-913 (1986), décrivent des 5-germaspira[4.4]nona-2,7 diène, notamment un composé de formule :

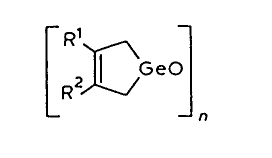

On connaît par ailleurs par le brevet US 2 451 871 des polymères obtenus à partir de chlorure de méthyle germanium, qui peuvent être utilisés comme lubrifiant pour certaines applications. Néanmoins, les propriétés rhéologiques de ces polymères ne permettent pas de répondre de façon satisfaisante aux buts fixés par la présente invention.

Les inventeurs ont constaté que des composés du germanium, dont la plupart sont nouveaux, présentaient des caractéristiques compatibles avec une utilisation comme huile biocompatible (notamment de bonnes caractéristiques rhéologiques), tout en ayant par ailleurs une biodégradabilité satisfaisante.

C'est pourquoi, l'invention a d'abord pour objet des composés germoxanes cycliques de formule: 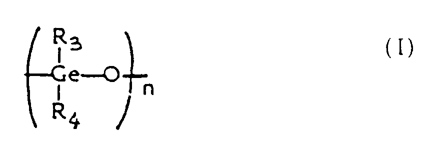 dans laquelle:
n est un nombre entier positif compris entre 3 et 50
ou germoxanes linéaires de formule : 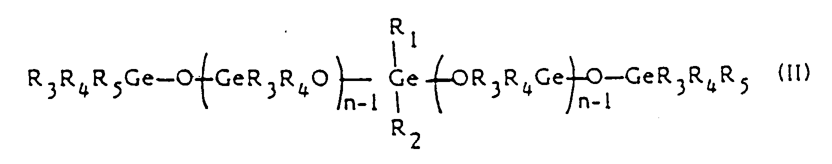 dans laquelle :
n est un nombre positif entier compris entre 1 et 50,
formules dans lesquelles les radicaux R₁, R₂, R₃, R₄, R₅ sont choisis parmi les radicaux hydrocarbyle,
ou bien les radicaux R₁, R₂ d'une part et R₃, R₄, d'autre part fixés au même atome de germanium, forment ensemble une chaîne hydrocarbonée, éventuellement comportant un ou deux hétéroatomes, éventuellement substituée par un ou plusieurs radicaux (C₁-C₃) alkyle, éventuellement insaturée,
à la condition que les différents radicaux R₁, R₂, R₃, R₄, R₅ ne puissent correspondre simultanément au radical méthyle ou éthyle et lorsque (I) est cyclique, les deux radicaux R₃, R₄ attachés au même atome de germanium ne puissent pas correspondre à une chaîne divalente de formule : 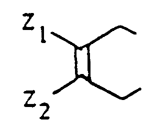 Z₁, Z₂ étant choisis parmi les radicaux méthyle ou l'atome d'hydrogène.

Les composés sont par ailleurs tels que lesdits composés ou un mélange de deux ou plusieurs desdits composés présentent une viscosité convenant pour une utilisation comme huile biocompatible.

La bonne biodégradabilité de ce type de composés résulte probablement de la constatation selon laquelle la liaison Ge-O est thermodynamiquement moins solide que la liaision Si-O, ce qui favorise donc sa rupture. Cette plus grande labilité de la liaison Ge-O et décrite dans la littérature, par exemple le Handbook of Chemistry and Physics.

Dans le contexte de la présente invention, le mot hydrocarbyle doit être compris comme incluant les groupes qui comprennent du carbone et de l'hydrogène. Les groupes hydrocarbyle ont un atome de carbone lié directement au reste de la molécule et ont un caractère principalement d'hydrocarbure. Ces groupes sont souvent appelés groupes à base d'hydrocarbures. Ces groupes comprennent les suivants :
(1) des groupes d'hydrocarbures, c'est-à-dire des groupes aliphatiques (par exemple alcoyle ou alcényle), alicycliques (par exemple cycloalcoyle ou cycloalcényle), aromatiques, aromatiques substitués par des groupes aliphatiques et alicycliques. De tels groupes sont connus de l'homme de l'art ; les exemples comprennent les groupes méthyle, éthyle, butyle, hexyle, octyle, décyle, dodécyle, tétradécyle, octadécyle, eicosyle, cyclohexyle et phényle (tous les isomères étant inclus).
(2) Des groupes d'hydrocarbures substitués, c'est-à-dire des groupes contenant des substituants non-hydrocarbyle qui, dans le contexte de la présente invention, n'altèrent pas le caractère principalement d'hydrocarbure du groupe. Les substituants appropriés comprennent des substituants halogéno.
(3) Des groupes hétéro, c'est-à-dire des groupes qui, bien que d'un caractère principalement d'hydrocarbure dans le contexte de la présente invention, contiennent des atomes, autres que de carbone, présents dans une chaîne ou un cycle composés par ailleurs d'atomes de carbone. Des hétéro-atomes appropriés seront évidents pour l'homme de l'art et comprennent, par exemple, ceux d'azote, d'oxygène et de soufre.

En général, il n'y aura pas plus d'environ trois substituants ou hétéro-atomes, et de préférence pas plus d'un, par 10 atomes de carbone dans le groupe à base d'hydrocarbures. D'une façon particulièrement préférable, les groupes à base d'hydrocarbures sont des groupes purement d'hydrocarbures.

Selon une variante avantageuse, les germoxanes répondent à la formule : 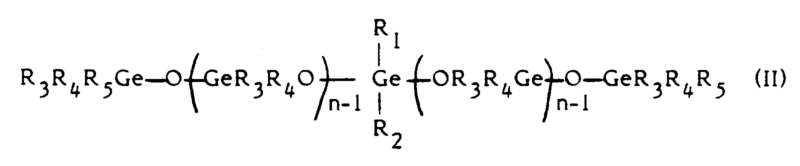 dans laquelle :
n est un nombre entier compris entre 1 et 50, de préférence 3 et 6, R₁, R₂, R₃, R₄, R₅ indépendamment l'un de l'autre ont l'une des significations précédentes.

Suivant une autre caractéristique avantageuse des composés conformes à l'invention, ils présentent des substituants de masse moléculaire relativement faible, par analogie avec les composés du silicium utilisables dans les mêmes applications.

De préférence, les substituants R₁ à R₅ sont choisis parmi les radicaux (C₁-C₆) alkyle, (C₂-C₆) alcényle, (C₃-C₆) cycloalkyle éventuellement substitué par un ou deux radicaux (C₁-C₃) alkyle, phényle éventuellement substitué par un ou deux radicaux (C₁-C₃) alkyle ou bien R₁, R₂ et/ou R₃, R₄ forment ensemble une chaine divalente, comportant 4 ou 5 atomes de carbone, éventuellement une insaturation éthylénique, éventuellement un à trois substituants (C₁-C₃) alkyle.

De préférence encore R₁, R₂ sont le radical méthyle.

Selon une autre variante avantageuse prise en combinaison avec l'une des deux variantes précédentes ou les deux R₃, R₄ sont choisis parmi les radicaux phényle éventuellement substitués ou ensemble forment une chaine divalente -C-C=C-C- éventuellement substitué par 1 ou 2 substituants méthyle ou éthyle, mais sur deux carbones différents et/ou R₅ est un radical n-propyle ou n-butyle.

Au lieu de la formule II linéaires, les germoxanes peuvent également dans un autre mode de réalisation préféré, correspondre à la formule :

(R₄R₃GeO)ₙ (III)

dans laquelle n est compris entre 3 et 6,
R₃, R₄ identiques ou différents ont l'une des significations indiquées ci-dessus y compris avec les variantes préférées.

Les composés selon l'invention peuvent être préparés par synthèse organique comportant plusieurs étapes, dans des conditions comparables à celles mises en oeuvre pour la préparation des huiles de silicone. Les conditions de synthèse varient suivant la viscosité et la géométrie désirées pour le composé final.

L'invention concerne également un procédé de préparation des composés de formule I ou II ou III, caractérisé en ce que l'on hydrolyse un dihalogénure de germanium hydrocarbyle de formule (R)₂GeX₂ X étant un atome d'halogène, R ayant l'une des significations indiquée précédemment, puis éventuellement en ce que l'on fait réagir le composé cyclique avec un hydrocarbyllithium (RLi) pour conduire à un composé de formule :

(R)₃GeOLi

qui est mis en contact avec un dihalogénure de germanium hydrocarbyle de formule (R)₂GeY₂,
Y étant un atome d'halogène, R ayant l'une des significations précédemment indiquée, ou en ce que ledit composé cyclique est ouvert par réaction avec un hydrocarbyllithium (RLi) et mis en contact ensuite avec le dihalogénure de germanium hydrocarbyle de forme (R)₂GeY₂.

Le procédé selon l'invention peut également être schématisé selon le schéma réactionnel suivant :

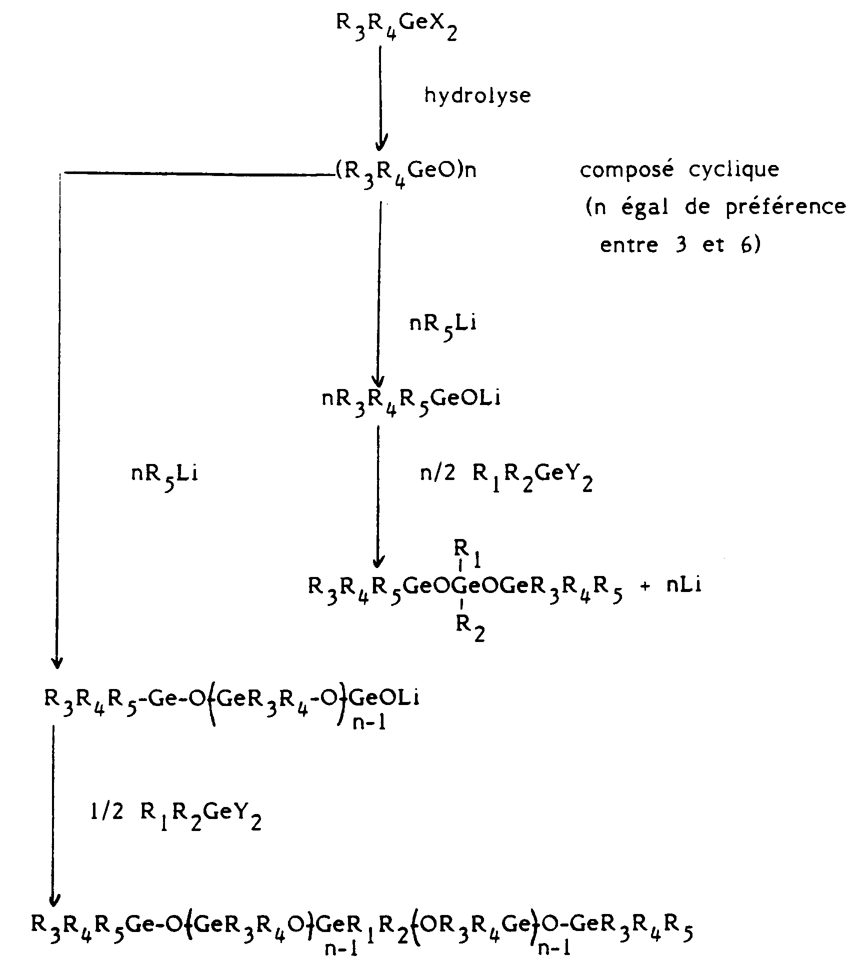

L'invention a également pour objet l'utilisation des composés conformes à l'invention de formule I : 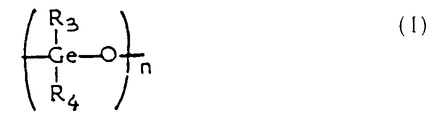 dans laquelle:
n est un nombre entier positif compris entre 3 et 50
ou germoxanes linéaires de formule : 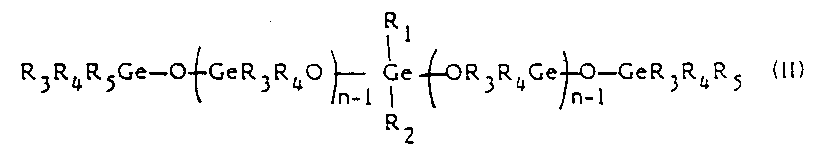 dans laquelle :
n est un nombre positif entier compris entre 1 et 50,
formules dans lesquelles les radicaux R₁, R₂, R₃, R₄, R₅ sont choisis parmi les radicaux hydrocarbyle,
ou bien les radicaux R₁, R₂ d'une part et R₃, R₄, d'autre part fixés au même atome de germanium, forment ensemble une chaîne hydrocarbonée, éventuellement comportant un ou deux hétéroatomes, éventuellement substituée par un ou plusieurs radicaux (C₁-C₃) alkyle, éventuellement insaturée,
à la condition que les différents radicaux R₁, R₂, R₃, R₄, R₅ ne puissent correspondre simultanément au radical méthyle ou éthyle.

Dans toutes les applications envisagées, un ou plusieurs des composés conforme à l'invention peuvent être utilisés simultanément. Dans le cas où plusieurs composés sont utilisés simultanément, c'est leur mélange qui présente les caractéristiques requises, notamment en termes de viscosité.

Il s'agit en particulier des utilisations comme fluide pour des dispositifs à usage interne au corps humain ou animal, comme par exemple des fluides de lubrification de seringue.

Il s'agit surtout des utilisations comme fluide de remplissage de prothèse pour lesquelles ils présentent un avantage en termes de biodégradabilité par rapport aux produits connus, notamment dans le cas des prothèses mammaires.

Enfin, l'invention a pour objet une prothèse molle, caractérisée en ce qu'elle comprend à titre de fluide de remplissage au moins un composé conforme à l'invention.

L'invention est illustrée par l'exemple suivant :

### Préparation du composé de formule :

Bu-Ge(C₆H₅)₂-O-Ge(CH₃)₂-O-Ge(C₆H₅)₂-Bu

1,5 g (2,06.10⁻³ mole) de [φ₂GeO]₃ dans 40 ml d'éther anhydre sont introduits dans un erlenmeyer rodé de 150 ml à deux tubulures, (purgé à l'argon) muni d'un réfrigérant et d'un bouchon à jupe. A l'aide d'une seringue, on introduit, sous agitation 3,9 ml (6,24.10⁻³ mole) d'une solution de BuLi 1,6 M.

Après addition, on chauffe une heure au reflux de l'éther. On introduit rapidement 0,53 g (3.09.10⁻³ mole) de Me₂GeCl₂. On maintient le reflux et l'agitation pendant une heure.

Le précipité (LiCl) est soustrait du mélange par filtration. L'éther est évaporé et on recueille 1,7 g de produit brut.

Le produit majoritaire est le produit attendu. Il est purifié sur colonne.

Le produit est ensuite introduit dans une enveloppe pour prothèse mammaire.

## Revendications

1. Germoxanes cycliques de formule: 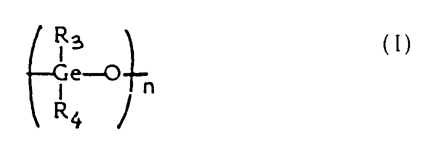 dans laquelle:
n est un nombre entier positif compris entre 3 et 50
ou germoxanes linéaires de formule : 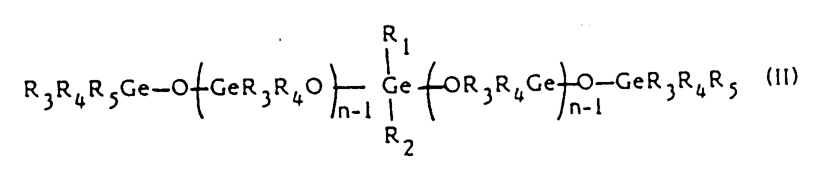 dans laquelle :
n est un nombre positif entier compris entre 1 et 50,
formules dans lesquelles les radicaux R₁, R₂, R₃, R₄, R₅ sont choisis parmi les radicaux hydrocarbyle,
ou bien les radicaux R₁, R₂, d'une part et R₃, R₄, d'autre part fixés au même atonie de germanium, forment ensemble une chaîne hydrocarbonée, éventuellement comportant un ou deux hétéroatomes, éventuellement substituée par un ou plusieurs radicaux (C₁-C₃) alkyle, éventuellement insaturée,
à la condition que les différents radicaux R₁, R₂, R₃, R₄, R₅ ne puissent correspondre simultanément au radical méthyle ou éthyle et lorsque (I) est cyclique, les deux radicaux R₃, R₄ attachés au même atome de germanium ne puissent pas correspondre à une chaîne divalente de formule : 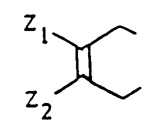 Z₁, Z₂ étant choisis parmi les radicaux méthyle ou l'atome d'hydrogène.

2. Germoxanes selon la revendication 1 de formule : 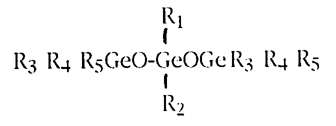 dans laquelle les radicaux R₁, R₂, R₃, R₄, R₅ sont choisis parmi ceux indiqués à la revendication 1.

3. Germoxanes selon la revendication 1 ou 2, caractérisés en ce que les substituants R₁ à R₅ sont choisis parmi les radicaux (C₁ -C₆) alkyle, (C₂-C₆) alcényle, (C₃-C₆) cycloalkyle eventuellement substitué par un ou deux radicaux (C₁-C₃) alkyle, phényle éventuellement substitué par un ou deux radicaux (C₁-C₃) alkyle ou bien R₁, R₂ et/ou R₃, R₄ forment ensemble une chaine divalente, comportant 4 ou 5 atomes de carbone éventuellement une insaturation éthylénique éventuellement un à trois substituants (C₁-C₃) alkyle.

4. Germoxanes selon la revendication 3, caractérisés en ce que R₁, R₂, sont le radical méthyle.

5. Germoxanes selon la revendication 3 ou 4, caractérisés en ce que R₃, R₄ sont choisis parmi les radicaux phényle éventuellement substitués ou ensemble forment une chaine divalente -C-C=C-C- éventuellement substitué par 1 ou 2 substituants méthyle ou éthyle, mais sur deux carbones différents et/ou R₅ est un radical n-propyle ou n-butyle.

6. Germoxanes cycliques selon la revendication 1, caractérisés en ce qu'il correspondent à la formule:
(R₄R₃GeO)ₙ (III)
dans laquelle n est compris entre 3 et 6,
R₃, R₄ identiques ou différents ont l'une des significations définies à l'une des revendications1, 3, 5.

7. Procédé de préparation des composés selon l'une des revendications 1 à 6, caractérisé en ce que l'on hydrolyse un dihalogénure de germanium hydrocarbyle de formule R₃R₄GeX₂
X étant un atome d'halogène, R₃,R₄ ayant l'une des significations de la revendication 1, puis éventuellement en ce que l'on fait réagir le composé cyclique avec un hydrocarbyllithium (R₅Li) R₅ ayant l'une des significations de la revendication 1, pour conduire à un composé de formule :
R₃R₄R₅GeOLi
qui est mis en contact avec un dihalogénure de germanium hydrocarbyle de formule R₁R₂GeY₂,
Y étant un atome d'halogène, R₁,R₂ ayant l'une des significations de la revendication 1, ou en ce que ledit composé cyclique est ouvert par réaction avec un hydrocarbyle lithium R₅Li et mis en contact ensuite avec le dihalogénure de germanium hydrocarbyle de forme R₁R₂GeY₂.

8. Germoxanes cycliques de formule: 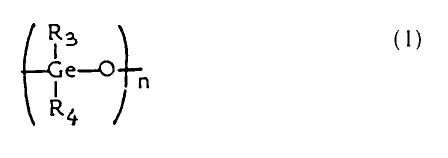 dans laquelle:
n est un nombre entier positif compris entre 3 et 50
ou germoxanes linéaires de formule : 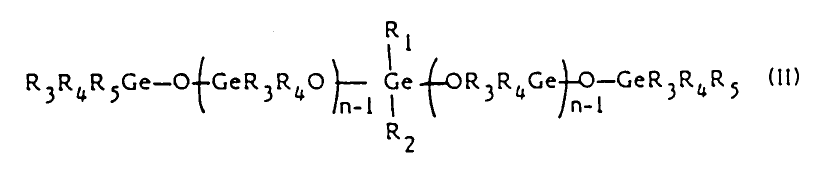 dans laquelle :
n est un nombre positif entier compris entre 1 et 50,
formules dans lesquelles les radicaux R₁, R₂, R₃, R₄, R₅ sont choisis parmi les radicaux hydrocarbyle,
ou bien les radicaux R₁, R₂ d'une part et R₃, R₄, d'autre part fixés au même atome de germanium, forment ensemble une chaîne hydrocarbonée, éventuellement comportant un ou deux hétéroatomes, éventuellement substituée par un ou plusieurs radicaux (C₁-C₃) alkyle, éventuellement insaturée,
à la condition que les différents radicaux R₁, R₂, R₃, R₄, R₅ ne puissent correspondre simultanément au radical méthyle ou éthyle pour leur application en tant que huile biocompatible dans le domaine biologique humain ou animal.

9. Utilisation des germoxanes selon l'une des revendications 1 à 6, ou de leurs mélanges comme fluide de lubrification de seringue.

10. Utilisation des germoxanes selon l'une des revendications 1 à 6, ou de leurs mélanges comme fluide de remplissage de prothèse.

11. Prothèse molle caractérisée en ce qu'elle comprend, à titre de fluide de remplissage, au moins un germoxane selon l'une des revendications 1 à 6.

## Claims

1. Cyclic germoxanes of formula: 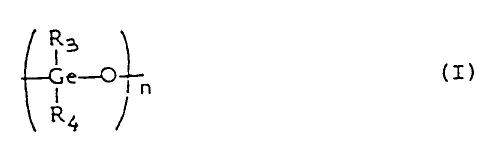 in which:
n is a positive integer between 3 and 50 or linear germoxanes of formula: 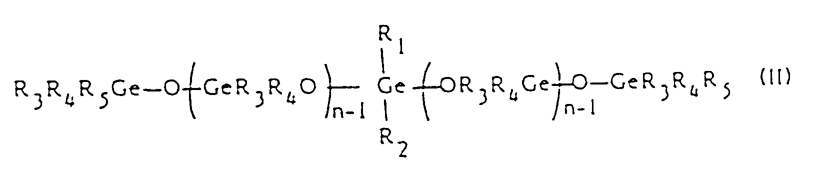 in which:
n is a positive integer between 1 and 50, in which formulae the radicals R₁, R₂, R₃, R₄, R₅ are chosen from hydrocarbyl radicals,
or alternatively, the R₁, R₂ on the one hand, and R₃, R₄ on the other hand, radicals attached to the same germanium atom together form a hydrocarbon chain optionally containing one or two heteroatoms, optionally substituted by one or more (C₁-C₃)alkyl radicals, optionally unsaturated,
provided that the different radicals R₁, R₂, R₃, R₄, R₅ cannot simultaneously correspond to a methyl or ethyl radical and when (I) is cyclic, the two radicals R₃, R₄ attached to the same germanium atom cannot correspond to a divalent chain of formula: 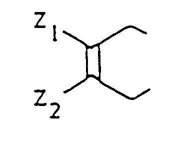 Z₁, Z₂ being chosen from methyl radicals or the hydrogen atom.

2. Germoxanes according to Claim 1, of formula: 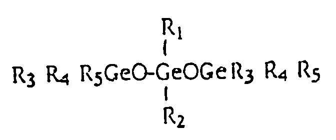 in which the radicals R₁, R₂, R₃, R₄, R₅ are chosen from those given in Claim 1.

3. Germoxanes according to Claim 1 or 2, characterized in that the substituents R₁ to R₅ are chosen from the radicals (C₁-C₆)alkyl, (C₂-C₆)alkenyl, (C₃-C₆)cycloalkyl which is optionally substituted by one or two (C₁-C₃)alkyl radicals, phenyl which is optionally substituted by one or two (C₁-C₃)alkyl radicals or alternatively R₁, R₂ and/or R₃, R₄ together form a divalent chain containing 4 or 5 carbon atoms, optionally one ethylenic unsaturation, optionally one to three (C₁-C₃)alkyl substituents.

4. Germoxanes according to Claim 3, characterized in that R₁, R₂ are a methyl radical.

5. Germoxanes according to Claim 3 or 4, characterized in that R₃, R₄ are chosen from optionally substituted phenyl radicals or together form a divalent chain -C-C=C-C- which is optionally substituted by 1 or 2 methyl or ethyl substituents, but on two different carbons and/or R₅ is an n-propyl or n-butyl radical.

6. Cyclic germoxanes according to Claim 1, characterized in that they correspond to the formula:
(R₄R₃GeO)ₙ (III)
in which n is between 3 and 6,
R₃, R₄, which are identical or different, have one of the meanings defined in one of Claims 1, 3 or 5.

7. Process for preparing the compounds according to one of Claims 1 to 6, characterized in that a germanium hydrocarbyl dihalide of formula R₃R₄GeX₂, X being a halogen atom, R₃, R₄ having one of the meanings of Claim 1, is hydrolysed, then, optionally, in that the cyclic compound is reacted with a hydrocarbyllithium (R₅Li), R₅ having one of the meanings of Claim 1, to give a compound of formula:
R₃R₄R₅GeOLi
which is brought into contact with a germanium hydrocarbyl dihalide of formula R₁R₂GeY₂,
Y being a halogen atom, R₁, R₂ having one of the meanings of Claim 1, or in that the said cyclic compound is opened by reaction with a hydrocarbyllithium R₅Li and then brought into contact with the germanium hydrocarbyl dihalide of the form R₁R₂GeY₂.

8. Cyclic germoxanes of formula: 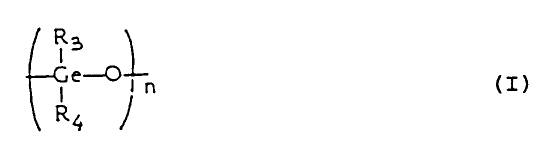 in which:
n is a positive integer between 3 and 50 or linear germoxanes of formula: 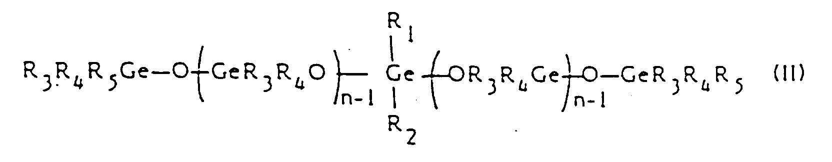 in which:
n is a positive integer between 1 and 50, in which formulae the radicals R₁, R₂, R₃, R₄, R₅ are chosen from hydrocarbyl radicals,
or alternatively, the R₁, R₂ on the one hand, and R₃, R₄ on the other hand, radicals attached to the same germanium atom together form a hydrocarbon chain optionally containing one or two heteroatoms, optionally substituted by one or more (C₁-C₃)alkyl radicals, optionally unsaturated,
provided that the different radicals R₁, R₂, R₃, R₄, R₅ cannot simultaneously correspond to a methyl or ethyl radical for their application as biocompatible oil in the field of human or animal biology.

9. Use of the germoxanes according to one of Claims 1 to 6 or of their mixtures as fluid for lubricating syringes.

10. Use of the germoxanes according to one of Claims 1 to 6 or of their mixtures as fluid for filling prostheses.

11. Soft prosthesis characterized in that it comprises, as filling fluid, at least one germoxane according to one of Claims 1 to 6.

## Patentansprüche

1. Cyclische Germoxane der Formel: 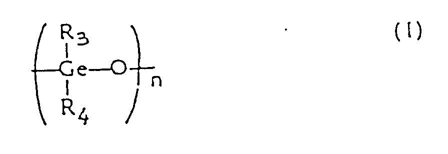 worin n für eine positive ganze Zahl zwischen 3 und 50 steht, oder
lineare Germoxane der Formel: 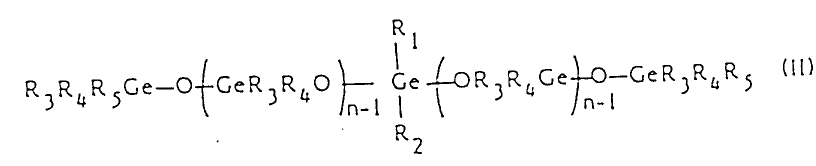 worin n für eine positive ganze Zahl zwischen 1 und 50 steht,
wobei in den Formeln die Reste R₁, R₂, R₃, R₄ und R₅ ausgewählt werden aus Hydrocarbylresten (Kohlenwasserstoffresten) oder die Reste R₁ und R₂ einerseits und die Reste R₃ und R₄ andererseits, die an das gleiche Germaniumatom gebunden sind, gemeinsam eine Kohlenwasserstoffkette bilden, die gegebenenfalls ein oder zwei Heteroatome enthält, die gegebenenfalls durch einen oder mehr gegebenenfalls ungesättigte (C₁-C₃)-Alkylreste substituiert sind,
mit der Maßgabe, daß die verschiedenen Reste R₁, R₂, R₃, R₄ und R₅ nicht gleichzeitig einen Methyl- oder Ethylrest darstellen können und daß dann, wenn (I) cyclisch ist, die beiden Reste R₃ und R₄, die an das gleiche Germaniumatom gebunden sind, keine divalente Kette der Formel darstellen können 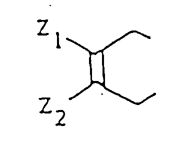 worin Z₁ und Z₂ ausgewählt werden aus Methylresten oder einem Wasserstoffatom.

2. Germoxane nach Anspruch 1 der Formel 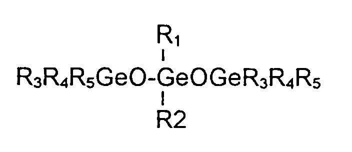 worin die Reste R₁, R₂, R₃, R₄ und R₅ unter solchen ausgewählt werden, wie sie im Anspruch 1 angegeben sind.

3. Germoxane nach Anspruch 1 oder 2, dadurch gekennzeichnet, daß die Substituenten R₁ bis R₅ ausgewählt werden aus (C₁-C₆)-Alkyl-Resten, (C₂-C₆)-Alkenyl-Resten, gegebenenfalls durch ein oder zwei (C₁-C₃)-Alkyl-Reste substituierten (C₃-C₆)-Cycloalkyl-Resten, gegebenenfalls durch ein oder zwei (C₁-C₃)-Alkyl-Reste substituierten Phenylresten oder worin R₁ und R₂ und/oder R₃ und R₄ gemeinsam eine divalente Kette bilden, die 4 oder 5 Kohlenstoffatome und gegebenenfalls eine ethylenische Unsättigung sowie gegebenenfalls 1 bis 3 (C₁-C₃)-Alkyl-Substituenten aufweist.

4. Germoxane nach Anspruch 3, dadurch gekennzeichnet, daß R₁ und R₂ für den Methylrest stehen.

5. Germoxane nach Anspruch 3 oder 4, dadurch gekennzeichnet, daß R₃ und R₄ ausgewählt werden aus gegebenenfalls substituierten Phenylresten oder gemeinsam eine divalente -C-C=C-C-Kette bilden, die gegebenenfalls durch ein oder zwei Methyl- oder Ethyl-Substituenten, jedoch an zwei unterschiedlichen Kohlenstoffatomen, substituiert ist, und/oder R₅ für einen n-Propyl- oder n-Butyl-Rest steht.

6. Cyclische Germoxane nach Anspruch 1, dadurch gekennzeichnet, daß sie der Formel entsprechen
(R₄R₃GeO)ₙ (III)
in der n für eine Zahl zwischen 3 und 6 steht und R₃ und R₄, die gleich oder verschieden sein können, eine der in einem der Ansprüche 1, 3 und 5 angegebenen Bedeutungen haben.

7. Verfahren zur Herstellung der Verbindungen nach einem der Ansprüche 1 bis 6, dadurch gekennzeichnet, daß man ein Hydrocarbylgermaniumdihalogenid der Formel R₃R₄GeX₂, worin X für ein Halogenatom steht und R₃ und R₄ eine der in Anspruch 1 angegebenen Bedeutungen haben, hydrolysiert und danach gegebenenfalls die cyclische Verbindung mit einem Hydrocarbyllithium (R₅Li), worin R₅ eine der in Anspruch 1 angegebenen Bedeutungen hat, reagieren läßt unter Bildung einer Verbindung der Formel
R₃R₄R₅GeOLi
die mit einem Hydrocarbylgermaniumdihalogenid der Formel R₁R₂GeY₂, worin Y für ein Halogenatom steht und R₁ und R₂ eine der in Anspruch 1 angegebenen Bedeutungen haben, in Kontakt bringt oder
daß man die genannte cyclische Verbindung durch Umsetzung mit einem Hydrocarbyllithium R₅Li öffnet und anschließend mit dem Hydrocarbylgermaniumdihalogenid der Formel R₁R₂GeY₂ in Kontakt bringt.

8. Cyclische Germoxane der Formel 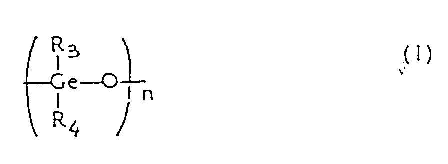 in der n für eine positive ganze Zahl zwischen 3 und 50 steht, oder
lineare Germoxane der Formel 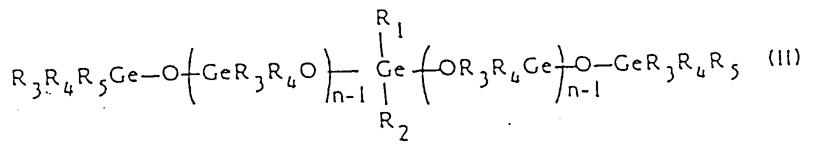 in der n für eine positive ganze Zahl zwischen 1 und 50 steht,
wobei in den Formeln die Reste R₁, R₂, R₃, R₄ und R₅ ausgewählt werden aus den Hydrocarbylresten oder die Reste R₁ und R₂ einerseits und R₃ und R₄ andererseits, die an das gleiche Germaniumatom gebunden sind, gemeinsam eine Kohlenwasserstoffkette bilden, die gegebenenfalls ein oder zwei Heteroatome trägt, die gegebenenfalls durch einen oder mehr, gegebenenfalls ungesättigte, (C₁-C₃)-Alkyl-Reste substituiert ist,
mit der Maßgabe, daß die verschiedenen Reste R₁, R₂, R₃, R₄ und R₅ nicht gleichzeitig einen Methyl- oder Ethylrest darstellen können,
die als biokompatibles Öl auf dem human- oder tierbiologischen Gebiet verwendbar sind.

9. Verwendung der Germoxane nach einem der Ansprüche 1 bis 6 oder ihrer Mischungen als Spritzen-Gleitflüssigkeit.

10. Verwendung der Germoxane nach einem der Ansprüche 1 bis 6 oder ihrer Mischungen als Flüssigkeit zum Füllen einer Prothese.

11. Weiche Prothese, dadurch gekennzeichnet, daß sie als Füllflüssigkeit mindestens ein Germoxan nach einem der Ansprüche 1 bis 6 enthält.
